# EUROPEAN PATENT APPLICATION

(11) **EP 4 250 392 A2**
(43) Date of publication of application: **27.09.2023**
(21) Application number: 23162850.4
(22) Date of filing: 20.03.2023
(51) Int. Cl.: H01M 4/131, H01M 4/525, H01M 10/052, H01M 4/36, H01M 4/02

(54) **SECONDARY BATTERY AND BATTERY MODULE INCLUDING SAME**

(30) Priority: 23.03.2022 KR 20220035904
(71) Applicant: SK On Co., Ltd., Seoul 03161 (KR)
(72) Inventor: HAN, Jun Hee, 3412 Daejeon (KR); JANG, Hwan Ho, 34124 Daejeon (KR); KIM, Moon Sung, 34124 Daejeon (KR); KIM, Hyo Mi, 34124 Daejeon (KR); NOH, Mi Jung, 34124 Daejeon (KR); RYU, Sang Baek, 34124 Daejeon (KR); YOOK, Seung Hyun, 34124 Daejeon (KR); CHUNG, Da Bin, 34124 Daejeon (KR); PARK, Da Hye, 34124 Daejeon (KR)
(74) Representative: Bird & Bird LLP

(57) **Abstract**

In accordance with an embodiment of the present disclosure, there are provided a secondary battery and a battery module including the secondary battery as a unit battery, the secondary battery including an electrode assembly including a first electrode group including a first cathode; and a second electrode group including a second cathode, wherein the first cathode includes a first cathode active material, and the second cathode includes a first cathode active material and a second cathode active material, and wherein the first cathode active material is a lithium-nickel composite oxide having primary particles whose particle diameter is less than or equal to 1 µm, and the second cathode active material is a lithium-nickel composite oxide having primary particles whose particle diameter is greater than 1 µm.

## Description

### BACKGROUND

### 1. Technical Field

The present disclosure relates to a secondary battery and a battery module including the same.

### 2. Related Art

With development of electronics, communications, and space industries, the demand for secondary batteries as an energy power source is rapidly increasing. In particular, as importance of global eco-friendly policies is emphasized, the electric vehicle market is growing by leaps and bounds, and research and development on secondary batteries are actively carried out at home and abroad.

Recently, the demand for batteries with high energy density for electric vehicles (EVs) is increasing, and therefore, development of secondary batteries to which high-Ni-based cathodes are applied is essential. However, the voltage for phase transition from H2 to H3 becomes low with continuous increases in the Ni content in cathode active materials. This causes generation of a large amount of gas upon charging/discharging and storage evaluation at high SOC, and thus problems arise such as venting of a pouch, posing difficulties and limitations in application to an actual battery design.

### SUMMARY

Embodiments provide a secondary battery which has improved high temperature storage performance and fast charging performance such that a design with high energy density may be applied and different current intensity may be derived from a single battery, and a battery module including the same.

In accordance with an aspect of the present disclosure, there is provided a secondary battery which includes an electrode assembly including a first electrode group including a first cathode; and a second electrode group including a second cathode, wherein the first cathode includes a first cathode active material, and the second cathode includes a first cathode active material and a second cathode active material, and wherein the first cathode active material is a lithium-nickel composite oxide having primary particles whose particle diameter is less than or equal to 1 µm, and the second cathode active material is a lithium-nickel composite oxide having primary particles whose particle diameter is greater than 1 µm. Accordingly, the first cathode active material of the first cathode and the first cathode active material of the second cathode are both lithium-nickel composite oxides, and both have a particle diameter of less than or equal to 1 µm. However, within this definition, the materials actually used can be different. For example, these can be two chemically different lithium-nickel composite oxides, each having primary particles whose particle diameter is less than or equal to 1 µm. However, in a preferred embodiment, the first cathode active material of the first cathode and the first cathode active material of the second cathode are identical (i.e., both in terms of their chemical composition and their particle diameter). Another aspect of the present invention therefore relates to a secondary battery which includes an electrode assembly including a first electrode group including a first cathode; and a second electrode group including a second cathode, wherein the first cathode includes a first cathode active material, and the second cathode includes the first cathode active material and a second cathode active material, and wherein the first cathode active material is a lithium-nickel composite oxide having primary particles whose particle diameter is less than or equal to 1 µm, and the second cathode active material is a lithium-nickel composite oxide having primary particles whose particle diameter is greater than 1 µm.

In an embodiment of the present disclosure, a mass ratio of the first cathode active material and the second cathode active material in the second cathode may be 1:9 to 9:1.

In an embodiment of the present disclosure, the mass ratio of the first cathode active material and the second cathode active material in the second cathode may be 3:7 to 9:1.

In an embodiment of the present disclosure, a ratio of the numbers of stacks of the first cathode and the second cathode in the electrode assembly may be 1:10 to 10:1.

In an embodiment of the present disclosure, the ratio of the numbers of stacks of the first cathode and the second cathode in the electrode assembly may be 1:1 to 10:1.

In an embodiment of the present disclosure, the first electrode group is disposed below the second electrode group, or the second electrode group may be disposed below the first electrode group.

In an embodiment of the present disclosure, a first cathode tab formed to extend from the first cathode in the first electrode group may be located on a left or right side of the electrode assembly, and a second cathode tab formed to extend from the second cathode in the second electrode group may be located on a right or left side of the electrode assembly.

In an embodiment of the present disclosure, the first cathode tab formed to extend from the first cathode in the first electrode group may be connected to a first electrode lead to form a first cathode tab-lead coupling portion, and the second cathode tab formed to extend from the second cathode in the second electrode group may be connected to a second electrode lead to form a second cathode tab-lead coupling portion.

In an embodiment of the present disclosure, the first electrode lead and the second electrode lead may be arranged in parallel and interposed in a single lead film together.

In an embodiment of the present disclosure, the first cathode tab-lead coupling portion and the second cathode tab-lead coupling portion may be formed by mechanical coupling or welding.

In an embodiment of the present disclosure, widths of the first cathode tab and the second cathode tab may be the same or different from each other.

In an embodiment of the present disclosure, the electrode assembly may be a stacked electrode assembly.

A battery module in accordance with an embodiment of the present disclosure includes the secondary battery in accordance with an embodiment of the present disclosure as a unit battery.

A device in accordance with an embodiment of the present disclosure includes the battery module in accordance with an embodiment of the present disclosure as a power source.

In accordance with an embodiment of the present disclosure, it is possible to provide a secondary battery which has improved high temperature storage performance and fast charging performance such that a design with high energy density may be applied and different current intensity may be derived from a single battery, and a battery module including the same.

### BRIEF DESCRIPTION OF THE DRAWINGS

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey the scope of the example embodiments to those skilled in the art.

In the drawing figures, dimensions may be exaggerated for clarity of illustration. It will be understood that when an element is referred to as being "between" two elements, it can be the only element between the two elements, or one or more intervening elements may also be present. Like reference numerals refer to like elements throughout.
FIG. 1 illustrates a floor plan of a secondary battery in accordance with an embodiment of the present disclosure including a first electrode group and a second electrode group.
FIG. 2 illustrates (a) a front cross-sectional view of a secondary battery in accordance with an embodiment of the present disclosure, and (b) a schematic cross-section of a first cathode tab and a second cathode tab that are formed to extend from a first cathode of a first electrode group and a second cathode of a second electrode group.
FIG. 3 illustrates (a) a floor plan of a secondary battery which includes a first cathode tab-lead coupling portion formed by connecting a first cathode tab to a first electrode lead and a second cathode tab-lead coupling portion formed by connecting a second cathode tab to a second electrode lead, while the first electrode lead and the second electrode lead are interposed in a single lead film together, and (b) a cross-section showing side surfaces of the secondary battery in (a) by dividing into each electrode group.
FIG. 4 illustrates a floor plan of a secondary battery which includes a first electrode group and a second electrode group and has two cathode tabs and one anode tab.
FIG. 5 illustrates a diagram to explain a structure of a stacked electrode assembly included in a secondary battery in accordance with an embodiment of the present disclosure.
FIG. 6 is an example of a structure of a stacked electrode assembly included in a secondary battery in accordance with an embodiment of the present disclosure, illustrating a diagram to explain a structure of a stacked and folded electrode assembly.
FIG. 7 is an example of a structure of a stacked electrode assembly included in a secondary battery in accordance with an embodiment of the present disclosure, illustrating a diagram to explain a structure of a Z-folded electrode assembly.
FIG. 8 illustrates a graph of a result of evaluation on fast charging performance in Examples and Comparative Examples.
FIG. 9 illustrates scanning electron microscopy (SEM) images of (a) primary particles of a first cathode active material and (b) primary particles of a second cathode active material.

### DETAILED DESCRIPTION

Herein, "first" or "second" is used to distinguish each component but not to limit location or order relationship.

The present disclosure provides a secondary battery which includes an electrode assembly including a first electrode group and a second electrode group, wherein a first cathode includes a first cathode active material, and a second cathode includes a first cathode active material and a second cathode active material, and wherein the first cathode active material is a lithium-nickel composite oxide having primary particles whose particle diameter is less than or equal to 1 µm, and the second cathode active material is a lithium-nickel composite oxide having primary particles whose particle diameter is greater than 1 µm. In a preferred embodiment of the present invention, the expression "particle diameter" as used herein refers to the volume-based median particle size D50. This means the particle diameter when a volumetric cumulative percentage corresponds to 50% in a particle size distribution obtained from particle volumes. The skilled person is well familiar with suitable measuring methods for determining the particle diameter, in particular D50. Suitable methods include those based on laser diffraction. LA 950V2 from Horiba Co. is a particle size analyser which may be used for this purpose.

The electrode group includes a cathode, an anode, and a separator interposed between the cathode and the anode, wherein in the present disclosure, the first electrode group includes a first cathode, a first anode, and a first separator, and the second electrode group includes a second cathode, a second anode, and a second separator. Unless otherwise disclosed, in the present disclosure, the first anode and the second anode, the first separator, and the second separator may be the same anode and separator, respectively.

As described above, when a high-Ni-based cathode active material is used, the voltage for phase transition from H2 to H3 decreases with a continuous increase in the Ni content in the cathode active material, such that a large amount of gas may be generated upon charge/discharge and storage evaluation at high SOC.

The secondary battery in accordance with the present disclosure includes two types of cathode active materials, that are, the first cathode active material which is a lithium-nickel composite oxide having primary particles whose particle diameter is less than or equal to 1 µm for deriving cell capacity and the second cathode active material which is a lithium-nickel composite oxide having primary particles whose particle diameter is greater than 1 µm to increase high temperature structural stability.

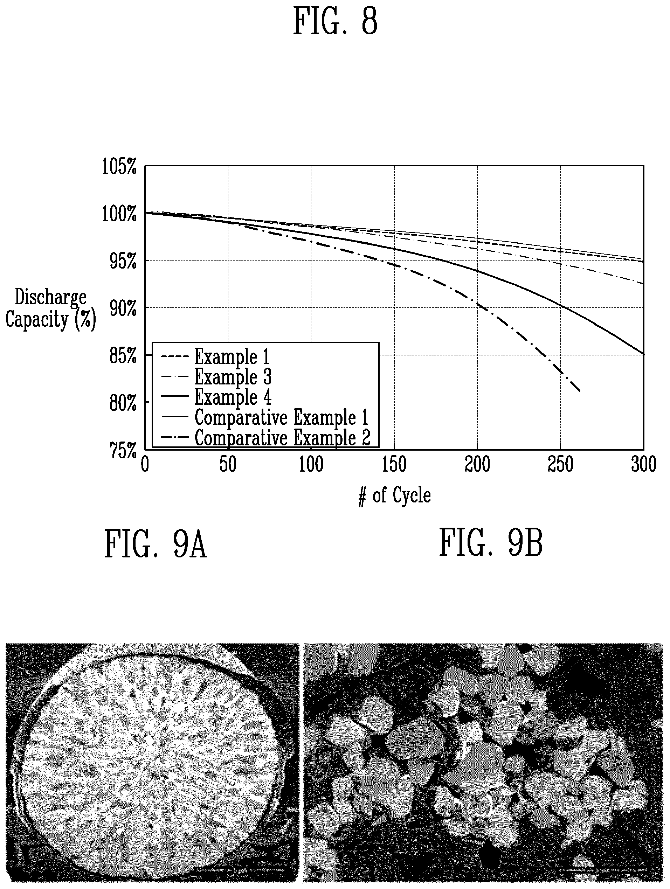

FIG. 9 illustrates scanning electron microscopy (SEM) images of (a) primary particles of the first cathode active material and (b) primary particles of the second cathode active material.

In accordance with an embodiment, the first cathode active material and the second cathode active material are lithium-nickel composite oxides, specifically represented by LiaNixMyO2 (x + y = 1, 0.6 < x < 0.95, 0.95 < a < 1.3), wherein M may typically be Mn, Co, Al, Ti, Zr, Sr, Y, and Mg, such as lithium-nickel-manganese-cobalt composite oxides. Since the first cathode active material has primary particles whose particle diameter is greater than or equal to 1 µm, the moving rate of lithium ions is fast upon charging and discharging, and there are many grain boundaries on which lithium may move between the primary particles, so the capacity and output are satisfactory, but an area for side reactions with electrolytes is also widened, which may cause shortcomings such as generation of a large amount of gas during phase transition from H2 to H3 under high temperature and high SOC conditions. On the contrary, the second cathode active material has primary particles whose particle diameter is greater than 1 µm and the area in which the side reaction occurs is Small, such that the amount of gas generated is small at high SOC. Therefore, by applying the second cathode active material together to the electrode group to which the first cathode active material having a high Ni composition is applied, it is possible to overcome the shortcomings concerning a large amount of gas generated at a high SOC. In addition, it is possible to overcome inferiority in the energy density when the second cathode active material is solely used, and also improve high temperature storage performance and fast charging performance.

Specifically, the first cathode includes the first cathode active material, the second cathode includes the first cathode active material and the second cathode active material, and a mass ratio of the first cathode active material and the second cathode active material in the second cathode may be less than or equal to 9:1, less than or equal to 8.5:1.5, less than or equal to 8:2, or less than or equal to 7:3, and may be greater than or equal to 1:9, greater than or equal to 1.5:8.5, greater than or equal to 2:8, or greater than or equal to 3:7. In accordance with an embodiment, the mass ratio of the first cathode active material and the second cathode active material in the second cathode may be 3:7 to 9:1 and 5:5 to 9:1.

When the mass ratio of the first cathode active material and the second cathode active material in the second cathode deviates from the above value, generation of a large amount of gas at high SOC may not be reduced, or the desired capacity and output may not be attained.

In accordance with an embodiment, the ratio of the numbers of stacks of the first cathode included in the first electrode group and the second cathode included in the second electrode group may be greater than or equal to 1:10, greater than or equal to 1:9.5, greater than or equal to 1:9, greater than or equal to 1:8.5, or greater than or equal to 1:8 and may be less than or equal to 10:1, less than or equal to 9.5:1, less than or equal to 9:1, less than or equal to 8.5:1, or less than or equal to 8:1, for example, it may be 1:10 to 10:1, 1:9.5 to 9.5:1, or 1:8 to 8:1. In accordance with an embodiment, the ratio of the numbers of stacks of the first cathode included in the first electrode group and the second cathode included in the second electrode group may be 1:1 to 10:1, and more specifically, 1:1 to 1:9. If the ratio of the numbers of stacks is too small or too large, it may be difficult to obtain improved energy density compared to the secondary battery in which the cathode active material is solely used, or the high temperature storage performance or fast charging performance may deteriorate.

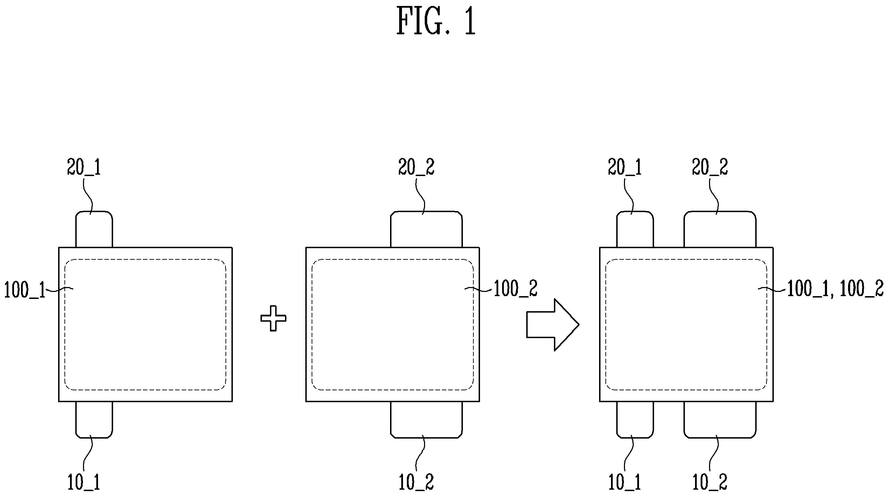

FIG. 1 illustrates a floor plan of the secondary battery in accordance with the present disclosure including the first electrode group and the second electrode group. Referring to FIG. 1, the secondary battery in accordance with the present disclosure includes two electrode groups, that are, a first electrode group 100_1 and a second electrode group 100_2. The first electrode group 100_1 may include the first cathode, the first separator, and the first anode, and the second electrode group 100_2 may include the second cathode, the second separator, and the second anode.

FIG. 1 schematically illustrates that each of the electrode groups 100_1 and 100_2 using each different cathode active material is included in a single electrode assembly in the secondary battery. The first electrode group 100_1 includes a first cathode tab 10_1 and a first anode tab 20_1, and the second electrode group 100_2 includes a second cathode tab 10_2 and a second anode tab 20_2.

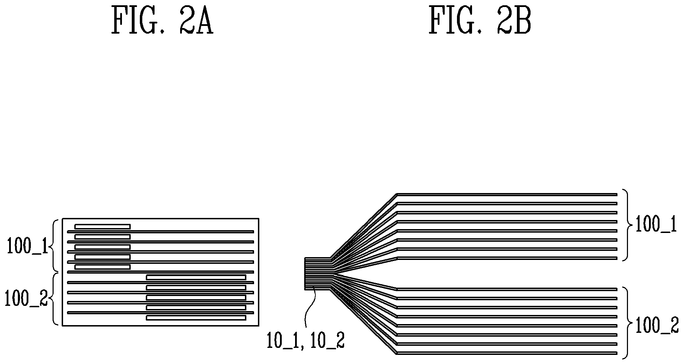

FIG. 2 illustrates (a) a front cross-sectional view of the secondary battery in accordance with an embodiment of the present disclosure, and (b) a schematic cross-section of the first cathode tab and the second cathode tab that are formed to extend from the first cathode in the first electrode group and the second cathode in the second electrode group.

In accordance with an embodiment, the first electrode group 100_1 may be disposed below the second electrode group 100_2, or the second electrode group 100_2 may be disposed below the first electrode group 100_1. Alternatively, the first electrode group 100_1 and the second electrode group 100_2 may be disposed alternately. In addition, the first cathode tab formed to extend from the first cathode in the first electrode group may be located on a left or right side of the electrode assembly, and the second cathode tab formed to extend from the second cathode in the second electrode group may be located on a right or left side of the electrode assembly. The left and right sides of the electrode assembly are based on views from a direction in which each cathode tab protrudes. Accordingly, in one embodiment, the first cathode tab formed to extend from the first cathode in the first electrode group may be located and the second cathode tab formed to extend from the second cathode in the second electrode group are located on different sides of the electrode assembly, preferably on opposing sides. Alternatively, the first cathode tab formed to extend from the first cathode in the first electrode group and the second cathode tab formed to extend from the second cathode in the second electrode group may extend in each different direction from the ends in each different direction.

In the front cross-sectional view of the secondary battery in accordance with the present disclosure in (a) of FIG. 2, it can be seen that an example of the first electrode group 100_1 that is disposed above the second electrode group 100_2 is shown. More specifically, in (a) of FIG. 2, the first cathode tab in the first electrode group 100_1 may be located in an upper left part, and the second cathode tab in the second electrode group 100_2 in a lower right part.

(b) of FIG. 2 is a schematic cross-section of the first cathode tab 10_1 and the second cathode tab 10_2 formed to extend from the first cathode in the first electrode group and the second cathode in the second electrode group, wherein an interval between the first electrode group 100_1 and the second electrode group 100_2 is exaggerated in order to clearly distinguish the electrode groups in the secondary battery.

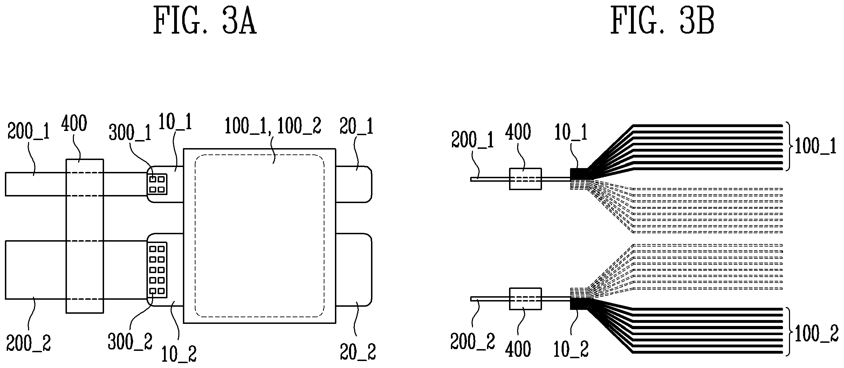

FIG. 3 illustrates (a) a floor plan of the secondary battery which includes a first cathode tab-lead coupling portion formed by connecting the first cathode tab to a first electrode lead and a second cathode tab-lead coupling portion formed by connecting the second cathode tab to a second electrode lead, while the first electrode lead and the second electrode lead are interposed in a single lead film together, and (b) a cross-section showing side surfaces of the secondary battery in (a) by dividing into each electrode group.

Referring to (a) of FIG. 3, the first cathode tab 10_1 is connected to the first electrode lead 200_1 to form the first cathode tab-lead coupling portion 300_1, and the second cathode tab 10_2 is connected to the second electrode lead 200_2 to form the second cathode tab-lead coupling portion 300_2. The first cathode tab-lead coupling portion 300_1 and the second cathode tab-lead coupling portion 300_2 may be formed by mechanical coupling or welding.

Since the first cathode tab 10_1 and the second cathode tab 10_2 are connected to each independent electrode lead, when the secondary battery in accordance with the present disclosure is applied to a module, different intensity of current may be derived from a single battery at the same time depending on the purpose of a design.

Here, the first electrode lead 200_1 and the second electrode lead 200_2 may be arranged in parallel and interposed in a single lead film 400 together.

Referring to (b) of FIG. 3, it illustrates that the first cathode tab 10_1 formed to extend from the first cathode in the first electrode group 100_1 is connected to the first electrode lead 200_1 and interposed in the lead film 400. In contrast to (a) of FIG. 3, a configuration with respect to the first electrode group 100_1 is shown above (b) of FIG. 3, where the dotted line represents a configuration with respect to the second electrode group 100_2. The configuration with respect to the second electrode group 100_2 is shown below (b) of FIG. 3, where the dotted line represents the configuration with respect to the first electrode group 100_1.

In accordance with an embodiment, the widths of the first cathode tab 10_1 and the second cathode tab 10_2 may be the same or different from each other. FIGS. 1 and 3 shows that the widths of the first cathode tab 10_1 and the second cathode tab 10_2 are different, but are not limited thereto.

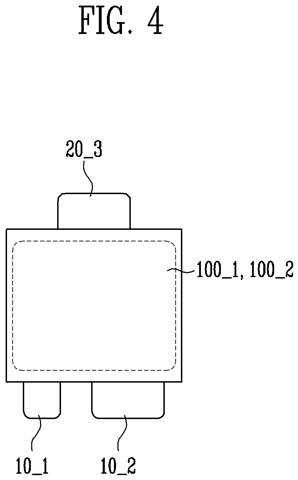

FIG. 4 illustrates a floor plan of the secondary battery which includes the first electrode group 100_1 and the second electrode group 100_2 and has two cathode tabs 10_1 and 10_2 and one anode tab 20_3.

Referring to FIG. 4, the secondary battery in which the number of cathode tabs and anode tabs is not the same, while including the first electrode group 100_1 and the second electrode group 100_2 that include each different cathode active material, may be provided. Aside from these, it may be transformed into various forms, but is not limited thereto.

In the case of the electrode assembly included in the secondary battery in accordance with the present disclosure, the cathode in the first electrode group and the cathode in the second electrode group should each be connected through the cathode tab extending in each different direction, such that all forms of electrode structures that may be connected through the separate cathode tab may be applied for each electrode group. For example, rather than a wound electrode assembly that is formed by winding one extending cathode and anode, it may be desirable that a stacked electrode assembly that is formed by stacking a plurality of cathodes and anodes is used. The stacked electrode assembly may refer to all structures in a form in which a plurality of electrode groups including the cathode, the separator, and the anode are stacked, and is not limited to a particular stacking method. For example, the stacked electrode assembly may be an electrode assembly formed using various stacking methods such as lamination and stacking, stacking and folding, and Z-folding.

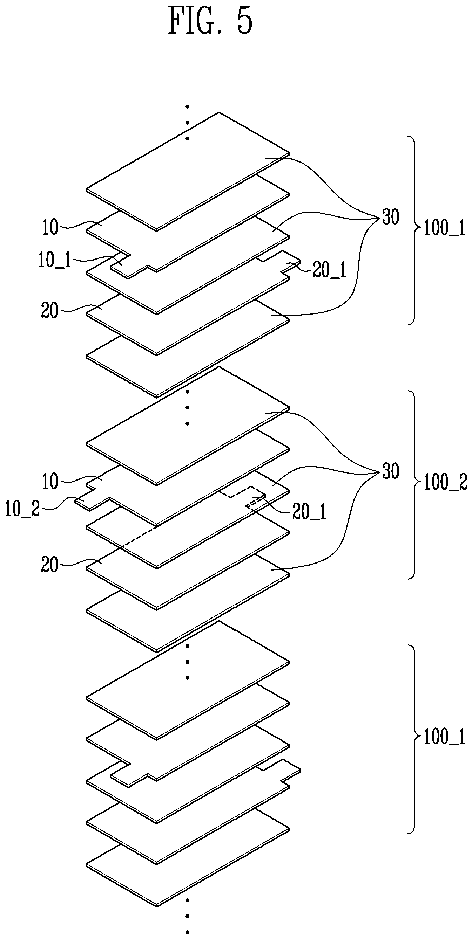

FIG. 5 illustrates a diagram of the stacked electrode assembly in accordance with an embodiment of the present disclosure.

Referring to FIG. 5, the electrode assembly may include the first electrode group 100_1 and the second electrode group 100_2. Each electrode group may include a cathode 10, a anode 20, and a separator 30. Each cathode and anode may include cathode tabs 10_1 and 10_2 and anode tabs 20_1 and 20_2 at the ends. The cathode tabs 10_1 and 10_2 and the anode tabs 20_1 and 20_2 may extend from the ends in the each different direction in the electrode assembly, and the first cathode tab 10_1 in the first electrode group 100_1 and the second cathode tab 10_2 in the second electrode group 100_2 may extend from the ends in the same direction in the electrode assembly, but may be disposed in each different position at different ends. For example, as shown in FIG. 5, the first cathode tab 10_1 in the first electrode group 100_1 may be disposed and protrude on a right side when viewed from a direction in which the cathode tab protrudes, and the second cathode tab 10_2 in the second electrode group 100_2 may be disposed and protrude on a left side. However, it is satisfactory that the first cathode tab 10_1 and the second cathode tab 10_2 are arranged in a form that may be distinguishably connected, and the position of each electrode tab may be variously changed.

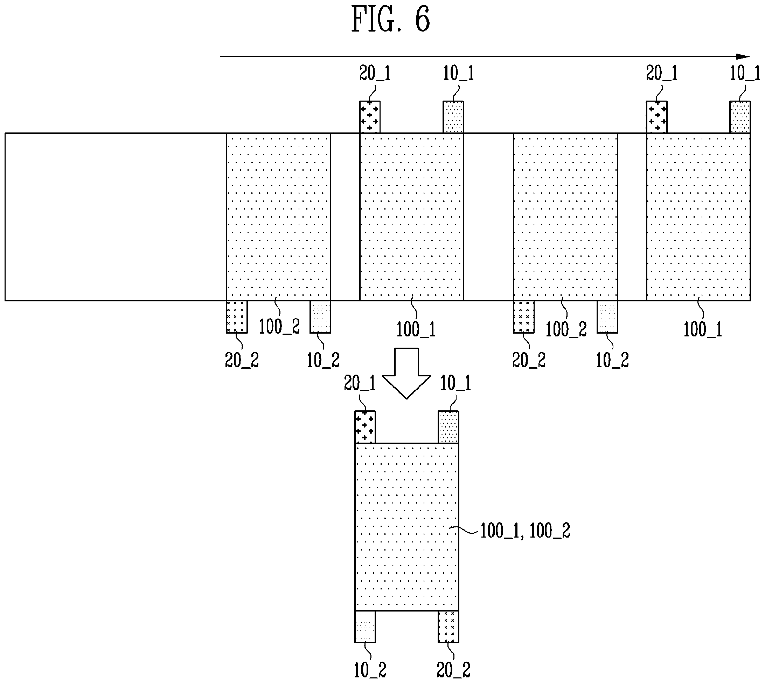

FIG. 6 is an example of the stacked electrode assembly, illustrating a diagram of the electrode assembly prepared by stacking and folding.

Referring to FIG. 6, in the case of a stacked and folded electrode assembly, it may be formed by winding or bending a separation film after arranging a plurality of electrode groups including the cathode and anode on the separation film. At this time, the electrode group arranged on the separation film may include one or more cathodes 10 and one or more anodes 20. Each cathode and anode may include cathode tabs 10_1 and 10_2 and anode tabs 20_1 and 20_2 at the ends. The cathode tabs 10_1 and 10_2 and the anode tabs 20_1 and 20_2 may extend from the ends in the same direction in the electrode assembly but may be disposed in each different position at the ends, and the first cathode tab 10_1 in the first electrode group 100_1 and the second cathode tab 10_2 in the second electrode group 100_2 may extend from the ends in each different direction in the electrode assembly. For example, when the assembled electrode assembly is viewed from the top as shown in FIG. 6, the first cathode tab 10_1 may be disposed and protrude on an upper right side of the electrode assembly, and the second cathode tab 10_2 may be disposed and protrude on a lower right side. However, it is satisfactory that the first cathode tab 10_1 and the second cathode tab 10_2 are arranged in a form that may be distinguishably connected, and the position of each electrode tab may be variously changed.

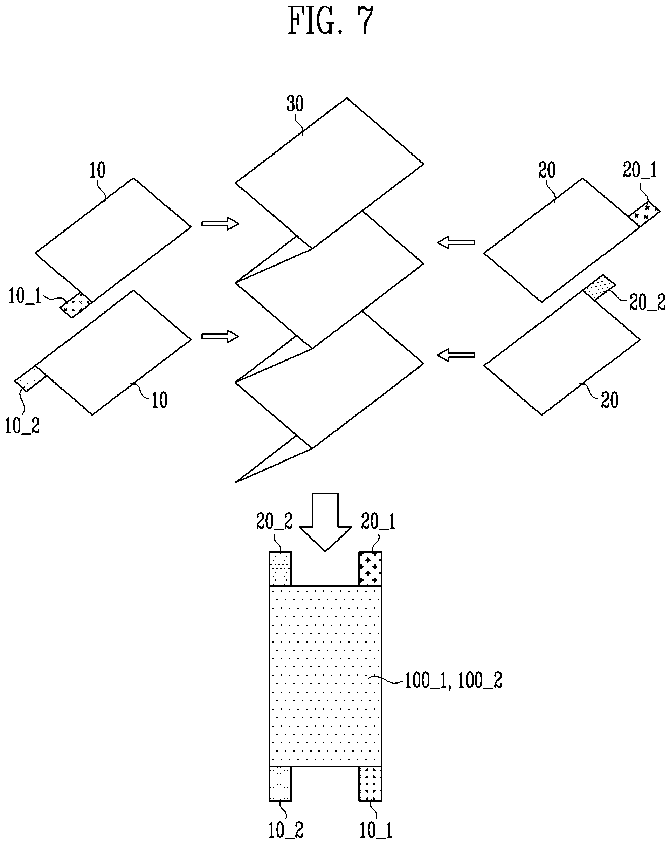

FIG. 7 is another example of the stacked electrode assembly, illustrating a diagram of the electrode assembly prepared via Z-folding.

Referring to FIG. 7, in the case of a Z-folded electrode assembly, it may be formed by alternately arranging the cathode 10 and the anode 20 between zigzag separation films.

It may be formed by winding or bending the separation film after arranging a plurality of electrode groups including the cathode and anode on the separation film. At this time, instead of being disposed in the separator in the form of the electrode group including the cathode and the anode as in the stacked and folded type in FIG. 6, a single cathode 10 and anode 20 may be disposed, but are not limited thereto. Each cathode and anode may include the cathode tabs 10_1 and 10_2 and anode tabs 20_1 and 20_2 at the ends.

The cathode tabs 10_1 and 10_2 and the anode tabs 20_1 and 20_2 may extend from the ends in each different direction in the electrode assembly, and the first cathode tab 10_1 in the first electrode group 100_1 and the second cathode tab 10_2 in the second electrode group 100_2 may extend from the ends in the same direction in the electrode assembly but may be disposed in different positions at the ends. For example, when the assembled electrode assembly is viewed form the top as shown in FIG. 7, the first cathode tab 10_1 may be disposed and protrude on a lower right side of the electrode assembly, and the second cathode tab 10_2 may be disposed and protrude on a lower left side. However, it is satisfactory that the first cathode tab 10_1 and the second cathode tab 10_2 are arranged in a form that may be distinguishably connected, and the position of each electrode tab may be variously changed.

In the case of the electrode assemblies disclosed in FIGS. 5 to 7, instead of having the plurality of first electrode groups 100_1 disposed below the plurality of second electrode groups 100_2 or the plurality of second electrode groups 100_2 disposed below the plurality of first electrode groups 100_1 as shown in FIGS. 2 and 3, the first electrode group 100_1 and the second electrode group 100_2 may be disposed alternately. However, the electrode assemblies in FIGS. 5 to 7 may also be formed to have, as shown in FIGS. 2 and 3, the plurality of first electrode groups 100_1 disposed below the plurality of second electrode groups 100_2 or the plurality of second electrode groups 100_2 disposed below the plurality of first electrode groups 100_1.

A battery module in accordance with an embodiment of the present disclosure includes the secondary battery in accordance with an embodiment of the present disclosure as a unit battery.

A device in accordance with an embodiment of the present disclosure includes the battery module in accordance with an embodiment of the present disclosure as a power source.

Hereinafter, the present disclosure will be described in more detail based on Examples and Comparative Examples. However, the following Examples and Comparative Examples are only for explaining the present disclosure in more detail, and the present disclosure is not limited by the following Examples and Comparative Examples.

### 1. Evaluation on energy density

A secondary battery in Examples 1 to 5 and Comparative Examples 1 to 2 was prepared, which includes a stacked electrode assembly including a first electrode group having a stack number of first cathodes and a second electrode group having a stack number of second cathodes as described in Table 1 below, then the energy density was evaluated, wherein the results are shown in Table 1 below.

The prepared electrode assembly was placed in a pouch case and sealed on three sides except a main liquid surface of an electrolyte. Here, a part where an electrode tab exists was included in the sealing portion. The electrolyte was injected through remaining surfaces except the sealing portion, and the remaining surface was sealed and impregnated for more than 12 hours.

Used as the electrolyte was a mixture obtained by dissolving 1M LiPF6 in a mixed solvent of EC/EMC/DEC (25/45/30; volume ratio) and then adding 1 wt% of vinylene carbonate (VC), 0.5 wt% of 1,3-profensultone (PRS) and 0.5 wt% of lithium bis(oxalate)borate (LiBOB).

Thereafter, pre-charging was performed at a current corresponding to 0.25 C for 36 minutes. After 1 hour, degassing was performed, followed by aging for more than 24 hours and then the formation charging and discharging (charging condition CC-CV 0.2C 4.2V 0.05C CUT-OFF, discharge condition CC 0.2C 2.5V CUTOFF).

Subsequently, the standard charging and discharging was performed (charging condition CC-CV 0.5C 4.2V 0.05C CUT-OFF, discharge condition CC 0.5C 2.5V CUT-OFF).

The total number of stacks in the cathode was 45, wherein the first cathode includes a first cathode active material that is a lithium-nickel composite oxide having primary particles whose particle diameter is less than or equal to 1 µm, and in the second cathode, the first cathode active material and a second cathode active material which is a lithium-nickel composite oxide having primary particles whose particle diameter is greater than 1 µm was included in a mass ratio of 7:3.

**TABLE 1**

| | Total number of stacks in cathode | Number of stacks in first cathode | Number of stacks in second cathode | Energy density (Wh/L) |
|---|---|---|---|---|
| Example 1 | 45 | 5 | 40 | 725 |
| Example 2 | 45 | 20 | 25 | 728 |
| Example 3 | 45 | 25 | 20 | 730 |
| Example 4 | 45 | 30 | 15 | 731 |
| Example 5 | 45 | 40 | 5 | 733 |
| Comparative Example 1 | 45 | 0 | 45 | 724 |
| Comparative Example 2 | 45 | 45 | 0 | 735 |

As a result of evaluation on energy density, compared to the energy density of 724 Wh/L in Comparative Example 1 to which the electrode group including the second cathode was solely applied, it was found that the energy density in Examples 1 to 5 was improved.

### 2. Evaluation on high temperature storage performance

After charging to 4.2V (charging condition CC-CV 0.3C 4.2V 0.05C CUT-OFF) for the secondary battery in accordance with Examples 1, 3, and 4 and Comparative Examples 1 and 2, the secondary battery was discharged to a voltage corresponding to SOC96% (discharge condition CC 0.3C) and then stored in a chamber at 60°C, and then a week in which cell venting occurs was measured and evaluated.

Results of evaluation are shown in Table 2 below.

**TABLE 2**

| | Example 1 | Example 3 | Example 4 | Comparative Example 1 | Comparative Example 2 |
|---|---|---|---|---|---|
| Week 1 | None | None | None | None | None |
| Week 2 | None | Small | Small | None | Small |
| Week 3 | Small | Small | Small | Small | Small |
| Week 4 | Small | Small | Small | Small | Small |
| Week 8 | Small | Medium | Medium | Small | Medium |
| Week 12 | Medium | Medium | Medium∼-Large | Medium | Medium∼-Large |
| Week 16 | Medium | Medium | Large | Medium | Large |
| Week 20 | Medium | Medium∼-Large | Large | Medium | Large |
| Week 24 | Medium∼-Large | Large | Large | Medium∼-Large | Vent |

As a result of evaluation on high temperature storage performance, compared to the vent occurred at 24th week in Comparative Example 2 that solely includes the electrode group including the first cathode, in Examples 1, 3, and 4, occurrence of the vent delayed by more then 4 to 8 weeks, with more improved effects observed.

### 3. Evaluation on fast charging performance

The fast charging performance was evaluated with respect to Examples 1, 3, and 4 and Comparative Examples 1 and 2.

After preparing the secondary battery using the cathode and all the same anode prepared in accordance with the Examples and Comparative Examples, charging was performed to reach DOD72 within 25 minutes in accordance with the step charging method at c-rate of 2.0C/1.75C/1.5C/1.25C/1.0C/0.75C/0.5C, and then discharging was performed at c-rate of 1/3C to conduct fast charging evaluation in a chamber where a constant temperature (25°C) set within the range of DOD72 (SOC8-80) is maintained. After repeating 50/100/150/200/250/300 cycles with a rest time of 10 minutes between charge/discharge cycles, the fast charging capacity retention rate was measured, and the results are shown in Table 3 and FIG. 8 below.

**TABLE 3**

| Number of cycles | 50 | 100 | 150 | 200 | 250 | 300 |
|---|---|---|---|---|---|---|
| Example 1 | 99.5% | 98.7% | 97.9% | 97.0% | 96.0% | 94.9% |
| Example 3 | 99.5% | 98.5% | 97.5% | 96.3% | 94.6% | 92.7% |
| Example 4 | 99.1% | 97.8% | 96.2% | 94.0% | 90.3% | 85.2% |
| Comparative Example 1 | 99.5% | 98.8% | 98.1% | 97.4% | 96.3% | 95.2% |
| Comparative Example 2 | 99.0% | 97.0% | 94.5% | 90.4% | 83.3% | - |

As a result of evaluation on the fast charging performance, compared to Comparative Example 2, which solely includes an electrode assembly group including the first cathode, it was found that the fast charging evaluation characteristics in Examples 1, 3, and 4 were improved.

While the present disclosure has been shown and described with reference to certain exemplary embodiments thereof, it will be understood by those skilled in the art that various changes in form and details may be made therein without departing from the spirit and scope of the present disclosure as defined by the appended claims and their equivalents. Therefore, the scope of the present disclosure should not be limited to the above-described exemplary embodiments but should be determined by not only the appended claims but also the equivalents thereof.

In the above-described embodiments, all steps may be selectively performed or part of the steps and may be omitted. In each embodiment, the steps are not necessarily performed in accordance with the described order and may be rearranged. The embodiments disclosed in this specification and drawings are only examples to facilitate an understanding of the present disclosure, and the present disclosure is not limited thereto. That is, it should be apparent to those skilled in the art that various modifications can be made on the basis of the technological scope of the present disclosure.

Meanwhile, the exemplary embodiments of the present disclosure have been described in the drawings and specification. Although specific terminologies are used here, those are only to explain the embodiments of the present disclosure. Therefore, the present disclosure is not restricted to the above-described embodiments and many variations are possible within the spirit and scope of the present disclosure. It should be apparent to those skilled in the art that various modifications can be made on the basis of the technological scope of the present disclosure in addition to the embodiments disclosed herein.

## Claims

1. A secondary battery, comprising an electrode assembly comprising a first electrode group which comprises a first cathode; and a second electrode group which comprises a second cathode,
wherein the first cathode comprises a first cathode active material, and
the second cathode comprises a first cathode active material and a second cathode active material, and
wherein the first cathode active material is a lithium-nickel composite oxide having primary particles whose particle diameter is less than or equal to 1 µm, and the second cathode active material is a lithium-nickel composite oxide having primary particles whose particle diameter is greater than 1 µm.

2. The secondary battery of claim 1, wherein a mass ratio of the first cathode active material and the second cathode active material in the second cathode is 1:9 to 9: 1.

3. The secondary battery of claim 2, wherein the mass ratio of the first cathode active material and the second cathode active material in the second cathode is 3:7 to 9: 1.

4. The secondary battery of any of the preceding claims, wherein a ratio of the numbers of stacks of the first cathode and the second cathode in the electrode assembly is 1: 10 to 10:1.

5. The secondary battery of claim 4, wherein the ratio of the numbers of stacks of the first cathode and the second cathode in the electrode assembly is 1: 1 to 10:1.

6. The secondary battery of any of the preceding claims, wherein the first electrode group is disposed below the second electrode group, or the second electrode group is disposed below the first electrode group.

7. The secondary battery of any of the preceding claims, wherein a first cathode tab formed to extend from the first cathode in the first electrode group is located on a left or right side of the electrode assembly, and
a second cathode tab formed to extend from the second cathode in the second electrode group is located on a right or left side of the electrode assembly.

8. The secondary battery of claim 7, wherein the first cathode tab formed to extend from the first cathode in the first electrode group is connected to a first electrode lead to form a first cathode tab-lead coupling portion, and
the second cathode tab formed to extend from the second cathode in the second electrode group is connected to a second electrode lead to form a second cathode tab-lead coupling portion.

9. The secondary battery of claim 8, wherein the first electrode lead and the second electrode lead are arranged in parallel and interposed in a single lead film together.

10. The secondary battery of any of claims 8 or 9, wherein the first cathode tab-lead coupling portion and the second cathode tab-lead coupling portion are formed by mechanical coupling or welding.

11. The secondary battery of any of claims 7 to 10, wherein widths of the first cathode tab and the second cathode tab are the same or different from each other.

12. The secondary battery of any of the preceding claims, wherein the electrode assembly is a stacked electrode assembly.

13. A battery module, comprising the secondary battery according to any of the preceding claims as a unit battery.

14. A device, comprising the battery module according to claim 13 as a power source.
